# EUROPÄISCHE PATENTANMELDUNG

(11) **EP 2 143 612 A1**
(43) Veröffentlichungstag der Anmeldung: **13.01.2010**
(21) Anmeldenummer: 09005778.7
(22) Anmeldetag: 24.04.2009
(51) Int. Cl.: B60W 30/12

(54) **Verfahren zum Warnen eines Fahrers eines Kraftfahrzeugs vor mangelndem Spurhaltevermögen**

(30) Priorität: 10.07.2008 GB 0812574
(71) Anmelder: Delphi Technologies, Inc., Troy MI 48007 (US)
(72) Erfinder: Dai, Xun, 42119 Wuppertal (DE); Park, Su-Birm, 52457 Aldenhoven (DE)
(74) Vertreter: Manitz, Finsterwald & Partner GbR

(57) **Zusammenfassung**

Die Erfindung betrifft ein Verfahren zum Warnen eines Fahrers eines Kraftfahrzeugs vor mangelndem Spurhaltevermögen, bei dem während der Fahrt die laterale Position des Fahrzeugs innerhalb einer Fahrspur ermittelt wird, die Aktivität des Fahrers hinsichtlich mindestens einer vorbestimmten Fahrerhandlung ermittelt wird, ein ein Maß für das Spurhaltevermögen des Fahrers darstellender Zähler in Abhängigkeit von der ermittelten Fahrzeugposition und der ermittelten Fahreraktivität erhöht wird, und eine Warnung an den Fahrer ausgegeben wird, wenn der Zähler einen vorbestimmten Schwellenwert überschreitet, und/oder dem Fahrer der momentane Status des Zählers angezeigt wird. Die Erfindung betrifft auch eine entsprechende Vorrichtung zum Warnen eines Fahrers eines Kraftfahrzeugs vor mangelndem Spurhaltevermögen.

## Beschreibung

Die Erfindung betrifft ein Verfahren zum Warnen eines Fahrers eines Kraftfahrzeugs vor mangelndem Spurhaltevermögen.

Verfahren zum Warnen eines Fahrers eines Kraftfahrzeugs vor Gefahrensituationen sind grundsätzlich bekannt und werden in der Regel von so genannten Fahrerassistenzsystemen ausgeführt. Beispielsweise kann ein Abstandswarnsystem ein Warnsignal an den Fahrer eines Fahrzeugs ausgeben, wenn der Abstand des Fahrzeugs zu einem vorausfahrenden Fahrzeug einen vorbestimmten Abstandsschwellenwert unterschreitet. Bekannt sind auch Spurhalteassistenzsysteme, welche den Fahrer eines Fahrzeugs vor dem Verlassen einer Fahrspur warnen. Dabei wird mit Hilfe eines optischen Systems die Position des Fahrzeugs in der Fahrspur bestimmt und bei Unterschreitung eines vorbestimmten Minimalabstands des Fahrzeugs zum Fahrbahnrand ein entsprechendes Warnsignal an den Fahrer ausgegeben.

Bekannt ist es auch, derartige Fahrerassistenzsysteme mit einer zusätzlichen Erfassung der Fahreraktivität zu verknüpfen, um auf diese Weise eine Ausgabe von Fehlwarnungen zu verhindern. Hierbei wird angenommen, dass ein Fahrer, der zum Beispiel gerade einen Fahrtrichtungsanzeiger, ein Bremspedal oder ein Gaspedal des Fahrzeugs betätigt oder betätigt hat, wachsam ist und sich bewusst in eine vermeintliche Gefahrensituation bringt, so dass eine in dieser Situation durch den Fahrer möglicherweise als störend empfundene Warnung unterdrückt werden kann.

Für jedes der voranstehend beschriebenen Fahrerassistenzsysteme gilt, dass es den Fahrer eines Fahrzeugs lediglich vor einer genau definierten Gefahrensituation warnt.

Der Erfindung liegt die Aufgabe zugrunde, ein Verfahren zu schaffen, welches es ermöglicht, den Fahrer eines Kraftfahrzeugs allgemein vor mangelndem Spurhaltevermögen zu warnen, insbesondere ohne dass eine konkrete Gefahrsituation unmittelbar bevorsteht.

Zur Lösung der Aufgabe ist ein Verfahren mit den Merkmalen des Anspruchs 1 vorgesehen.

Gemäß dem erfindungsgemäßen Verfahren wird während der Fahrt die laterale Position des Fahrzeugs innerhalb einer Fahrspur ermittelt, die Aktivität des Fahrers hinsichtlich mindestens einer vorbestimmten Fahrerhandlung ermittelt, ein Zähler, welcher ein Maß für das Spurhaltevermögen des Fahrers darstellt, in Abhängigkeit von der ermittelten Fahrzeugposition und der ermittelten Fahraktivität erhöht und eine Warnung an den Fahrer ausgegeben, wenn der Zähler einen vorbestimmten Schwellenwert überschreitet, und/oder dem Fahrer der momentane Status des Zählers angezeigt.

Der Erfindung liegt der allgemeine Gedanke zugrunde, das Fahrverhalten des Fahrers eines Kraftfahrzeugs über einen längeren Zeitraum hinweg zu beobachten und anhand des beobachteten Verhaltens auf das Spurhaltevermögen des Fahrers zu schließen. Konkret erfolgt die Beurteilung des Spurhaltevermögens des Fahrers mit Hilfe eines Zählers, welcher vorzugsweise ab dem Beginn einer Fahrt ständig aktualisiert wird, insbesondere erhöht wird, beispielsweise im Falle ausgewählter Gefahrensituationen, oder erniedrigt wird, beispielsweise wenn der Fahrer das Fahrzeug durch ein aktives Verhalten besonders gut in der Spur hält. Erreicht der Zähler einen vorbestimmten Schwellenwert, so wird angenommen, dass der Fahrer nicht mehr in der Lage ist, die Fahrspur sicher einzuhalten, und zur Vermeidung eines Unfalls eine Fahrpause einlegen sollte. Der angenommene Mangel an Spurhaltevermögen wird dem Fahrer im Wege einer geeigneten Warnung signalisiert, die in an sich bekannter Weise optischer und/oder akustischer Natur sein kann und/oder eine Vibration beispielsweise des Lenkrads und/oder des Fahrersitzes umfassen kann.

Alternativ oder zusätzlich ist es auch möglich, dem Fahrer - kontinuierlich oder auf Anfrage - den jeweils aktuellen Status des Zählers anzuzeigen, beispielsweise in Form eines größer bzw. kleiner werdenden Balkens und/oder einer geeigneten Farbcodierung. Auf diese Weise kann sich der Fahrer jederzeit über die aktuelle Einschätzung seines Spurhaltevermögens informieren. Dies kann ihn dazu motivieren, die Fahrt bereits vorzeitig zu unterbrechen, oder ihn spielerisch dazu herausfordern, aufmerksamer zu fahren, um dadurch den Zählerwert zu verbessern. Beides trägt letztlich zu einer Minimierung des Unfallrisikos bei.

Durch die Auswertung des Fahrverhaltens über einen längeren Zeitraum lässt sich nicht nur ein möglicherweise von Fahrtbeginn an bestehendes Unvermögen des Fahrers detektieren, eine Fahrspur einzuhalten, beispielsweise im Fall von Trunkenheit oder einer anderen gesundheitlichen Beeinträchtigung, sondern es lässt sich auch ein erst nach längerer Zeit auftretendes Unvermögen zur Einhaltung der Fahrspur detektieren, welches beispielsweise aus einer Ermüdung des Fahrers resultieren kann. Darüber hinaus kann auch eine beispielsweise aus der länger andauernden Benutzung eines Telefons oder aus der länger andauernden Bedienung eines Navigationsgeräts, eines Radios, einer Klimaanlage, einer Sitzverstelleinrichtung oder eines Bordcomputers resultierende Ablenkung des Fahrers in die Beurteilung seines Spurhaltevermögens einfließen. Das erfindungsgemäße Verfahren trägt somit zu einer deutlichen Erhöhung der Verkehrssicherheit bei.

Vorteilhafte Ausbildungen der Erfindung sind den Unteransprüchen, der Beschreibung und der Zeichnung zu entnehmen.

Gemäß einer Ausführungsform wird der Zähler erhöht, wenn eine signifikante Abweichung der ermittelten Fahrzeugposition von einer Sollposition des Fahrzeugs in der Fahrspur detektiert wird. Mit anderen Worten wird das Fahren von beispielsweise Schlangenlinien als ein Indiz für mangelndes Spurhaltevermögen gewertet, was zu einer Erhöhung des Zählers führt. Die Sollposition kann dabei anwenderspezifisch definiert sein und entspricht im einfachsten Fall einer Ausrichtung des Fahrzeugs in der Mitte der Fahrspur. Alternativ kann die Sollposition aber auch von einer mittigen Ausrichtung abweichen. Beispielsweise kann die Sollposition im Rechtsverkehr ausgehend von der Mitte der Fahrspur um einen gewissen Betrag in Richtung des rechten Fahrbahnrandes versetzt sein, da ein sich im Rechtsverkehr bewegender Fahrer sein Fahrzeug erfahrungsgemäß eher etwas weiter rechts als mittig in der Fahrspur halten wird. Entsprechend kann die Sollposition im Linksverkehr ausgehend von der Mitte der Fahrspur um einen gewissen Betrag nach links versetzt sein.

Gemäß einer weiteren Ausführungsform wird der Zähler erhöht, wenn eine der folgenden Bedingungen erfüllt ist:
a) Die ermittelte laterale Fahrzeugposition innerhalb der Fahrspur weicht signifikant von einem mittleren Wert der lateralen Fahrzeugpositionen ab, die während einer vergangenen ersten Zeitspanne, z.B. innerhalb der letzten 15 Sekunden, ermittelt wurden. Eine signifikante Abweichung kann beispielsweise eine Abweichung um mehr als die Standardabweichung von dem Mittelwert der Fahrzeugpositionen innerhalb der ersten Zeitspanne sein.
b) Das Fahrzeug nähert sich mit einer einen ersten Geschwindigkeitsschwellenwert unterschreitenden lateralen Geschwindigkeit, z.B. mit weniger als 0,5 m/s, bis auf eine einen Distanzschwellenwert unterschreitende Distanz, z.B. bis auf weniger als 0,3 m, einer Fahrbahngrenze an, wonach das Fahrzeug innerhalb einer zweiten Zeitspanne, z.B. innerhalb einer Sekunde, und mit einer einen zweiten Geschwindigkeitsschwellenwert überschreitenden Geschwindigkeit, z.B. mit mehr als 0,1 m/s, wieder zu einer Sollposition innerhalb der Fahrspur zurückkehrt. Diese Kriterien können beispielsweise erfüllt sein, wenn das Fahrzeug aufgrund einer Unachtsamkeit des Fahrers in Richtung eines Randes der Fahrspur driftet, der Fahrer das Abdriften aber noch rechtzeitig vor einem Verlassen der Fahrspur bemerkt und entsprechend gegensteuert.
c) Das Fahrzeug verlässt die Fahrspur zumindest teilweise, z.B. um einen Betrag von bis zu 0,3 m. Das Maß der Erhöhung des Zählers hängt in diesem Fall bevorzugt von der Reaktion des Fahrers ab:
   Lenkt der Fahrer das Fahrzeug nach dem Verlassen der Fahrspur innerhalb eines vorbestimmten Zeitraums, von z.B. einigen Zehntelsekunden, wieder zurück in die Fahrspur, weil er seinen Fehler selbst bemerkt oder weil er durch einen möglicherweise vorhandenen Spurhalteassistenten des Fahrzeugs gewarnt wird, so kann der
   Zähler um einen ersten Betrag erhöht werden. Reagiert der Fahrer hingegen nicht innerhalb des vorbestimmten Zeitraums bzw. bringt er das Fahrzeug trotz einer Warnung durch einen Spurhalteassistenten nicht zurück in die Fahrspur, so kann der Zähler um einen zweiten Betrag erhöht werden, der größer als der erste Betrag ist und sicherstellt, dass der Zähler den Schwellenwert jedenfalls überschreitet, damit der Fahrer unabhängig von einem gegebenenfalls vorhandenen Spurhalteassistenten gewarnt wird.
d) Keine der voranstehenden Bedingungen a) bis c) ist erfüllt, und es wird während einer vergangenen zweiten Zeitspanne, z.B. während der letzten vergangenen Minute, keine vorbestimmte Fahrerhandlung detektiert. Diese Kriterien tragen einer nachlassenden Konzentration oder natürlichen Ermüdung des Fahrers Rechnung, die beispielsweise vorkommen kann, wenn der Fahrer über einen längeren Zeitraum eine ereignislose Fahrt erlebt, in deren Verlauf sich die Aufmerksamkeit des Fahrers verringert.
   Gemäß einer weiteren Ausführungsform wird der Zähler erniedrigt, wenn ermittelt wird, dass der Fahrer mindestens eine vorbestimmte Fahrerhandlung vornimmt. Aus der Vornahme der mindestens einen vorbestimmten Handlung durch den Fahrer wird geschlossen, dass der Fahrer mit einer erhöhten Aufmerksamkeit am Verkehr teilnimmt, welche sich positiv auf das Spurhaltevermögen des Fahrers auswirkt.
   Die vorbestimmten Fahrerhandlungen können folgende Handlungen umfassen:
e) Ein Fahrtrichtungsanzeigerschalter des Fahrzeugs wird betätigt, d.h. der Fahrer setzt den Blinker, um einen beabsichtigten Spurwechsel anzuzeigen.
f) Ein Lenkrad des Fahrzeugs wird betätigt, und/oder eine Gierbeschleunigung des Fahrzeugs überschreitet einen vorbestimmten Gierbeschleunigungsschwellenwert, beispielsweise von 4 Grad/s².
   Beide Kriterien lassen den Schluss zu, dass ein Lenkvorgang durch den Fahrer bewusst eingeleitet wurde, und kann daher ebenfalls als ein Indiz für eine erhöhte Aufmerksamkeit des Fahrers gewertet werden.
g) Ein Bremspedal des Fahrzeugs wird betätigt.
h) Ein Gaspedal des Fahrzeugs wird betätigt, und/oder eine Längsbeschleunigung des Fahrzeugs überschreitet einen vorbestimmten Längsbeschleunigungsschwellenwert, z.B. von 2 m/s².
   Sowohl das Kriterium g) als auch das Kriterium h) deutet darauf hin, dass der Fahrer mit einer gewissen Aufmerksamkeit am Verkehr teilnimmt, was für sein Spurhaltevermögen spricht.
   Des Weiteren kann der Zähler erniedrigt werden, wenn die mittlere Geschwindigkeit des Fahrzeugs, die während einer vergangenen dritten Zeitspanne, z.B. während der letzten drei Minuten, herrschte, für länger als die dritte Zeitspanne unterhalb eines vorbestimmten Fahrzeuggeschwindigkeitsschwellenwerts, z.B. von 50 km/h, liegt. Dieses Kriterium trägt der Erfahrung Rechnung, dass ein sich innerhalb einer geschlossenen Ortschaft bewegender Fahrer typischerweise eine erhöhte Aufmerksamkeit an den Tag legt, was sich ebenfalls positiv auf die Beurteilung des Spurhaltevermögens des Fahrers auswirkt.
   Gemäß einer weiteren Ausführungsform wird der Zähler vorübergehend unverändert gelassen, wenn eine der folgenden Bedingungen erfüllt ist:
i) Die Breite der Fahrspur unterschreitet einen vorbestimmten Fahrspurbreitenschwellenwert, z.B. von 3,0 m. Dieser Fall tritt beispielsweise auf, wenn das Fahrzeug eine Baustelle oder eine enge Gasse durchfährt. In solchen Situationen ist erfahrungsgemäß mit einer erhöhten Aufmerksamkeit des Fahrers zu rechnen.
k) Die mittlere Geschwindigkeit des Fahrzeugs, welche während einer vergangenen vierten Zeitspanne, von z.B. drei Minuten, herrschte, liegt für weniger als die vierte Zeitspanne unterhalb eines vorbestimmten Fahrzeuggeschwindigkeitsschwellenwerts, z.B. von 50 km/h.
l) Während einer vergangenen fünften Zeitspanne, z.B. während der letzten vergangenen Minute, wurde weder eine Fahrzeugposition ermittelt, noch eine vorbestimmte Fahrerhandlung detektiert, noch ist die Bedingung c) oder d) erfüllt. Die Bedingung 1) dient insbesondere dazu, eine fehlerhafte Erhöhung oder Erniedrigung des Zählers in dem Fall vorzunehmen, dass eine für die Fahrspurüberwachung vorgesehene Kamera keine Daten liefert und der Fahrer keine Aktivität zeigt, und verhindert somit eine Fehleinschätzung des Spurhaltevermögens des Fahrers.

Eine genauere Einschätzung des Spurhaltevermögens des Fahrers wird außerdem dadurch erreicht, wenn die Bedingung a) vorübergehend ignoriert wird, beispielsweise für die nachfolgenden 20 Sekunden, wenn ein Wechsel der Fahrspur detektiert wird. Auf diese Weise wird verhindert, dass die im Falle eines Fahrspurwechsels bewusste Abweichung der lateralen Fahrzeugposition von der Sollposition innerhalb der Fahrspur zu einer unnötigen Erhöhung des Zählers führt und gegebenenfalls in einer Ausgabe einer Fehlwarnung resultiert.

Entsprechend können bei Detektion mindestens einer vorbestimmten Fahrerhandlung die Bedingungen a) und c) oder die Bedingungen b) und c) vorübergehend ignoriert werden, beispielsweise für 15 Sekunden. In diesem Fall wird also angenommen, dass es sich bei der Abweichung einer ermittelten Fahrzeugposition von der Sollposition um eine von dem Fahrer gewollte Abweichung handelt, wenn der Fahrer aktiv ins Fahrgeschehen eingreift und insbesondere eine oder mehrere der Handlungen e) bis h) vornimmt. Auch hierdurch wird folglich eine ungerechtfertigte Erhöhung des Zählers verhindert, welche unter Umständen zu einer Fehlwarnung führen kann.

Umgekehrt kann die Ermittlung der Fahreraktivität vorübergehend unterdrückt werden, beispielsweise für die nächsten 15 Sekunden, wenn die Bedingung b) oder c) detektiert wird, gegebenenfalls unter gleichzeitiger Detektion einer vorbestimmten Fahrerhandlung. Auf diese Weise wird verhindert, dass eine Erhöhung des Zählers infolge eines Abdriftens des Fahrzeugs in Richtung des Fahrbahnrandes durch eine nachfolgende Fahrerhandlung in Reaktion darauf, beispielsweise ein plötzliches Gegenlenken, um das Fahrzeug wieder in die Sollposition zu bringen, zu einer Abschwächung der Erhöhung des Zählers führt, wodurch die Einschätzung des Spurhaltevermögens des Fahrers verfälscht würde.

Gemäß einer weiteren Ausführungsform wird die Bedingung b) ignoriert, wenn sie unmittelbar vor der Bedingung c) detektiert wird. Auf diese Weise ist sichergestellt, dass die gefährlichere Situation, nämlich das tatsächliche Verlassen der Fahrspur, vorrangig in die Beurteilung des Spurhaltevermögens des Fahrers eingeht. Dies ist insbesondere dann besonders wichtig, wenn die Bedingung c) zu einer stärkeren Erhöhung des Zählers führt als die Bedingung b).

Gemäß einer weiteren Ausführungsform führt die Detektion der Bedingung a) zu einer vorübergehenden Unterdrückung einer erneuten Ermittlung der Bedingung a), beispielsweise für die nächsten zwei Sekunden. Alternativ oder zusätzlich kann die Detektion einer vorbestimmten Fahrerhandlung zu einer vorübergehenden Unterdrückung einer erneuten Ermittlung der Fahreraktivität führen, beispielsweise ebenfalls für die nächsten zwei Sekunden. Hierdurch ist sichergestellt, dass eine mehrfach aufeinander folgende Detektion der Bedingung a) bzw. einer Fahrerhandlung nicht zu einer überproportional starken Erhöhung bzw. Erniedrigung des Zählers führt, was insgesamt in einer realistischeren Beurteilung des Spurhaltevermögens des Fahrers resultiert.

Besonders vorteilhaft ist es, wenn der Zähler aufgrund der Bedingungen a) bis c) um einen größeren Betrag erhöht wird als aufgrund der Bedingung d), da auf diese Weise einer möglichen Gefährdung, die aus einer unzureichenden Einhaltung der Fahrspur resultieren kann, ein größeres Gewicht bei der Beurteilung des Spurhaltevermögens des Fahrers zukommt als der zwangsläufig nachlassenden Konzentration eines Fahrers während einer langen Fahrt. Beispielsweise können die Beträge, um welche der Zähler aufgrund der Bedingungen a) bis c) erhöht wird, so gewählt sein, dass bereits nach einer zweimaligen Detektion einer dieser Bedingungen der Zählerschwellenwert erreicht und eine Warnung ausgegeben wird. Auf diese Weise kann ein Fahrer bereits nach vergleichsweise kurzer Zeit vor einer Weiterfahrt gewarnt werden, z.B. wenn er aufgrund von Trunkenheit oder einer gesundheitlichen Beeinträchtigung nicht in der Lage ist, das Fahrzeug in der Fahrspur zu halten. Umgekehrt wird der Zähler regelmäßig in kleinen Schritten erhöht, wenn der Fahrer über einen längeren Zeitraum fehlerfrei unterwegs ist, so dass dem Fahrer auch bei fehlerfreier Fahrweise irgendwann angezeigt wird, dass er eine Pause einlegen sollte.

Bevorzugt werden die Beträge, um welche der Zähler im Falle der Bedingungen a) bis d) erhöht wird, vergrößert, wenn zusätzlich zu der erfüllten Bedingung ermittelt wird, dass der Fahrer sich für mehr als eine sechste Zeitspanne, z.B. länger als 30 s, mit einem Gerät aus der Gruppe befasst, die ein Telefon, ein Navigationsgerät, ein Radio, eine Klimaanlage, eine Sitzverstelleinrichtung und einen Bordcomputer umfasst. Beispielsweise können die Beträge um jeweils um einen zusätzlichen festen Betrag oder um einen vorgegebenen Faktor vergrößert werden.

Auf diese Weise wird der Tatsache Rechnung getragen, dass ein Fahrer, der sich während der Fahrt über einen längeren Zeitraum hinweg mit einem der genannten Geräte beschäftigt, beispielsweise telefoniert oder ein Navigationsgerät programmiert, abgelenkt ist. Eine solche Ablenkung des Fahrers sollte daher zu einer stärkeren Gewichtung der Bedingungen a) bis d) und somit zu einer stärkeren Erhöhung des Zählers, letztlich also zu einer schnelleren Überschreitung des Zählerschwellenwertes und damit Ausgabe einer Warnung führen.

Um zu verhindern, dass der Fahrer trotz schlechter Einhaltung der Fahrspur durch übermäßige Aktivität den Zähler künstlich auf einem niedrigen Wert halten kann, ist es ferner vorteilhaft, wenn der Zähler aufgrund einer detektierten Fahreraktion um einen geringeren Betrag erniedrigt wird als er aufgrund der Bedingungen a) bis c) erhöht wird.

Gemäß einer weiteren Ausführungsform kann auch die Ausgabe einer Warnung durch ein Spurhalteassistenzsystem des Fahrzeugs zu einer Erhöhung des Zählers führen. Die Ausgabe einer Warnung durch das Spurhalteassistenzsystem geht mit anderen Worten als ein zusätzlicher Parameter in die Beurteilung des Spurhaltevermögens des Fahrers ein. Davon abgesehen läuft die Beurteilung des Spurhaltevermögens des Fahrers aber parallel zu der Arbeit des Spurhalteassistenzsystems ab.

Weiterer Gegenstand der Erfindung ist ferner eine Vorrichtung zum Warnen eines Fahrers eines Kraftfahrzeugs vor mangelndem Spurhaltevermögen, insbesondere zur Durchführung des voranstehend beschriebenen Verfahrens, durch welche sich die voranstehend beschriebenen Vorteile entsprechend erreichen lassen.

Die Vorrichtung umfasst eine Kamera, die einen vor dem Fahrzeug liegenden Bodenbereich überwacht, und ein mit der Kamera verbundenes Bildauswertungsmodul zur Ermittlung der Position des Fahrzeugs innerhalb einer Fahrspur anhand von Bildern, die durch die Kamera aufgenommen werden. Bei der Kamera kann es sich beispielsweise um die Kamera eines Spurhalteassistenzsystems des Fahrzeugs handeln.

Ferner umfasst die Vorrichtung ein Modul zur Erfassung der Fahreraktivität, welches mit wenigstens einer Fahrer/Fahrzeug-Schnittstelle, wie z.B. einem Fahrtrichtungsanzeigerschalter, einem Bremspedal, einem Gaspedal, einem Lenkrad etc., und/oder mit wenigstens einem Beschleunigungssensor des Fahrzeugs verbunden ist.

Des Weiteren umfasst die Vorrichtung ein mit dem Bildauswertungsmodul und dem Fahreraktivitätserfassungsmodul verbundenes Steuermodul, welches in Abhängigkeit von der ermittelten Fahrzeugposition und der erfassten Fahreraktivität einen ein Maß für das Spurhaltevermögen des Fahrers darstellenden Zähler erhöht und welches die Ausgabe einer Warnung an den Fahrer initiiert, wenn der Zähler einen vorbestimmten Schwellenwert überschreitet, und/oder dem Fahrer den momentanen Status des Zählers anzeigt. Dabei kann der momentane Status des Zählers kontinuierlich oder alternativ auf Anfrage des Fahrers angezeigt werden, beispielsweise in Form eines größer bzw. kleiner werdenden Balkens und/oder einer Farbcodierung.

Nachfolgend wird die Erfindung rein beispielhaft anhand einer vorteilhaften Ausführungsform unter Bezugnahme auf die beigefügte Zeichnung beschrieben. Es zeigen:
- Fig. 1: eine Draufsicht auf ein sich entlang einer zweispurigen Straße bewegendes Fahrzeug, welches mit einer erfindungsgemäßen Vorrichtung zum Warnen des Fahrers des Fahrzeugs vor mangelndem Spurhaltevermögen ausgestattet ist; und
- Fig. 2: eine schematische Darstellung der erfindungsgemäßen Vorrichtung.

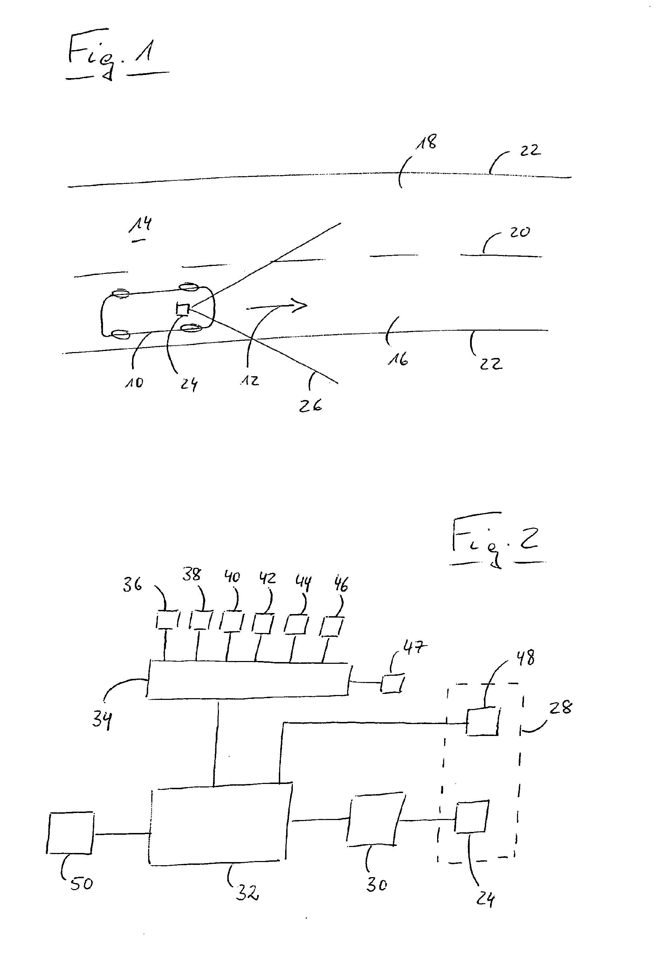

Fig. 1 zeigt ein Kraftfahrzeug 10, das sich in einer durch einen Pfeil 12 gekennzeichneten Fahrtrichtung entlang einer Straße 14 bewegt, in Fig. 1 also von links nach rechts. Die Straße umfasst zwei Fahrspuren 16, 18, die durch eine gestrichelte innere Fahrbahnmarkierung 20 voneinander getrennt sind und die an ihren voneinander abgewandten äußeren Rändern jeweils durch eine durchgezogene äußere Fahrbahnmarkierung 22 begrenzt sind. In der dargstellten Situation befindet sich das Fahrzeug in der in Fahrtrichtung 12 gesehen rechten Fahrspur 16, welche an ihrem in Fahrtrichtung 12 gesehenen linken Rand durch die gestrichelte innere Fahrbahnmarkierung 20 und an ihrem in Fahrtrichtung 12 gesehenen rechten Rand durch die durchgezogene äußere Fahrbahnmarkierung 22 begrenzt ist.

Das Fahrzeug 10 ist mit einer Kamera 24 ausgestattet, welche einen in Fahrtrichtung 12 vor dem Fahrzeug 10 liegenden Umgebungsbereich des Fahrzeugs 10 überwacht. Die Kamera 24 ist derart ausgerichtet, dass die Fahrspur 16, in welcher sich das Fahrzeug 10 befindet, und insbesondere die die Fahrspur 16 definierenden Fahrbahnmarkierungen 20, 22 von dem Blickfeld 26 der Kamera 24 erfasst werden. Bei der Kamera 24 kann es sich beispielsweise um eine Videokamera handeln, die Teil eines Spurhalteassistenzsystems 28 ist.

Wie Fig. 2 zeigt, ist die Kamera 24 mit einem Bildauswertungsmodul 30 verbunden, welches dazu dient, aus den von der Kamera 24 aufgenommenen Bildern, genauer gesagt aus der Lage der Fahrbahnmarkierungen 20, 22 in den von der Kamera 24 aufgenommenen Bildern, die laterale Position des Fahrzeugs 10 innerhalb der Fahrspur zu ermitteln, in der sich das Fahrzeug 10 gerade befindet, in diesem Fall also der Fahrspur 16. Die ermittelte Fahrzeugposition wird mit einer Sollposition des Fahrzeugs 10 in der Fahrspur 16 verglichen, um eine Abweichung der tatsächlichen Fahrzeugposition von der Sollposition zu ermitteln.

Die Sollposition kann anwenderspezifisch definiert sein und entspricht im einfachsten Fall einer Ausrichtung des Fahrzeugs 10 in der Mitte der Fahrspur 16. Alternativ kann die Sollposition auch von einer mittigen Ausrichtung des Fahrzeugs 10 abweichen. Beispielsweise kann die Sollposition im Rechtsverkehr ausgehend von der Mitte der Fahrspur 16 um einen gewissen Betrag in Richtung des rechten Fahrbahnrandes 22 versetzt sein, da ein sich im Rechtsverkehr bewegender Fahrer sein Fahrzeug 10 erfahrungsgemäß eher etwas weiter rechts als mittig in der Fahrspur 16 halten wird. Entsprechend kann die Sollposition im Linksverkehr ausgehend von der Mitte der Fahrspur um einen gewissen Betrag nach links versetzt sein.

Die ermittelte Abweichung der tatsächlichen Fahrzeugposition von der Sollposition wird von dem Bildauswertungsmodul 30 an ein Steuermodul 32 übergeben. Alternativ wäre es auch möglich, die in dem Bildauswertungsmodul 30 ermittelte Fahrzeugposition an das Steuermodul 32 zu übergeben und erst in dem Steuermodul 32 die Abweichung der ermittelten Fahrzeugposition von der Sollposition zu ermitteln.

Das Steuermodul 32 ist mit einem Modul 34 zur Erfassung der Fahreraktivität verbunden, welches seinerseits mit mehreren Fahrer/Fahrzeug-Schnittstellen in Verbindung steht. Diese Fahrer/Fahrzeug-Schnittstellen können beispielsweise einen Fahrtrichtungsanzeigerschalter 36, ein Bremspedal 38, ein Gaspedal 40 und ein Lenkrad 42 des Fahrzeugs umfassen. Betätigt der Fahrer des Fahrzeugs 10 eine dieser Schnittstellen 36 bis 42, so wird dies durch das Fahreraktivitätserfassungsmodul 34 erfasst, und das Fahreraktivitätserfassungsmodul 34 meldet an das Steuermodul 32, dass der Fahrer aktiv in das Fahrgeschehen eingreift, nämlich beispielsweise den Blinker setzt, das Gaspedal 40 drückt und gegebenenfalls das Lenkrad 42 nach links dreht, um z.B. ein vorausfahrendes Fahrzeug zu überholen, oder bremst, um einen Abstand zu einem vorausfahrenden Fahrzeug zu wahren.

Alternativ oder zusätzlich zu einer Verbindung des Fahreraktivitätserfassungsmoduls 34 mit dem Bremspedal 38, dem Gaspedal 40 und dem Lenkrad 42 kann das Fahreraktivitätserfassungsmodul 34 auch mit einem Sensor 44 zur Erfassung einer Längsbeschleunigung des Fahrzeugs 10 und/oder mit einem Sensor 46 zur Erfassung einer Gierbeschleunigung des Fahrzeugs 10 in Verbindung stehen, um eine vom Fahrer initiierte Beschleunigung bzw. Lenkbewegung des Fahrzeugs 10 zu erfassen.

Das Fahreraktivitätserfassungsmodul 34 ist außerdem mit einem Sensor 47 verbunden, welcher die Geschwindigkeit des Fahrzeugs 10 erfasst.

Des Weiteren kann das Fahreraktivitätserfassungsmodul 34 mit mindestens einem (nicht dargestellten) Gerät verbunden sein, welches den Fahrer tendenziell vom eigentlichen Fahrgeschehen ablenkt. Bei diesem ablenkenden Gerät kann es sich beispielsweise um ein Telefon, ein Navigationsgerät, ein Radio, eine Klimaanlage, eine Sitzverstelleinrichtung oder auch einen Bordcomputer handeln.

In Abhängigkeit von der ermittelten Abweichung der tatsächlichen Position des Fahrzeugs 10 in der Fahrspur 16 von der Sollposition und der ermittelten Fahreraktivität variiert das Steuermodul 32 einen Zähler, welcher ein Maß für das Spurhaltevermögen des Fahrers darstellt. Der Fahrer wird für umso unfähiger eingeschätzt, die Fahrspur 16 einzuhalten, je höher der Wert des Zählers ist.

Dabei gilt grundsätzlich, dass der Zähler dann um einen besonders großen Betrag erhöht wird, wenn es zu einer signifikanten Abweichung der ermittelten Fahrzeugposition von der Sollposition kommt, ohne dass das Fahreraktivitätserfassungsmodul 34 gleichzeitig eine der genannten Fahrerhandlungen detektiert. Unter diesen Bedingungen wird nämlich angenommen, dass der Fahrer das Fahrzeug 10 nicht mehr ordentlich in der Fahrspur 16 halten kann, weil sein Spurhaltevermögen eingeschränkt ist, sei es aufgrund von Müdigkeit, Alkohol oder einer gesundheitlichen Beeinträchtigung. Der Betrag der Erhöhung des Zählers kann dabei so groß gewählt sein, dass bereits ein zweimaliges Auftreten einer signifikanten Abweichung der Fahrzeugposition von der Sollposition während einer Fahrt zu einer Überschreitung eines Zählerschwellenwertes und zur Ausgabe einer Warnung führt. Außerdem kann der Betrag der Erhöhung des Zählers unter den genannten Bedingungen vergrößert werden, wenn zusätzlich festgestellt wird, dass sich der Fahrer über einen längeren Zeitraum hinweg, z.B. für mehr als 30 s, mit einem ablenkenden Gerät befasst.

Eine signifikante Abweichung der ermittelten Fahrzeugposition von der Sollposition kann hingegen dann als unschädlich erachtet werden, wenn der Fahrer gleichzeitig aktiv am Fahrgeschehen teilnimmt, beispielsweise indem er den Blinker 36 setzt, das Lenkrad 42 einschlägt und aufs Gaspedal 40 drückt, da in diesem Fall angenommen wird, dass der Fahrer das Fahrzeug 10 bewusst aus der Sollposition herauslenkt, was auf eine erhöhte Aufmerksamkeit des Fahrers schließen lässt.

Um einer nachlassenden Konzentration oder natürlichen Ermüdung des Fahrers Rechnung zu tragen, die beispielsweise vorkommen kann, wenn der Fahrer über einen längeren Zeitraum eine ereignislose Fahrt erlebt, in deren Verlauf sich die Aufmerksamkeit des Fahrers erfahrungsgemäß verringert, wird der Zähler außerdem dann um jeweils einen vergleichsweise kleinen Betrag erhöht, wenn über einen vorbestimmten Zeitraum hinweg weder eine signifikante Abweichung der tatsächlichen Fahrzeugposition von der Sollposition ermittelt wird, noch eine der genannten Fahrerhandlungen detektiert wird.

Wird keine signifikante Abweichung der tatsächlichen Fahrzeugposition von der Sollposition ermittelt, so führt die Vornahme einer der genannten Handlungen durch den Fahrer zu einer vergleichsweise geringen Erniedrigung des Zählers, da dies als ein Indiz dafür gewertet wird, dass der Fahrer mit einer erhöhten Aufmerksamkeit am Verkehr teilnimmt, welche sich positiv auf das Spurhaltevermögen des Fahrers auswirkt.

Des Weiteren kann der Zähler um einen vergleichsweise kleinen Betrag erniedrigt werden, wenn sich das Fahrzeug 10 über einen längeren Zeitraum hinweg mit einer mittleren Geschwindigkeit bewegt, welche unterhalb eines vorbestimmten Fahrzeuggeschwindigkeitsschwellenwerts, z.B. von 50 km/h, liegt, da in diesem Fall angenommen wird, dass sich das Fahrzeug innerhalb einer geschlossenen Ortschaft bewegt und der Fahrer deshalb eine erhöhte Aufmerksamkeit an den Tag legt.

Außerdem kann der Zähler unter bestimmten Umständen vorübergehend unverändert gelassen werden, beispielsweise wenn die Breite der Fahrspur eine vorbestimmte Breite, von z.B. 3,0 m, unterschreitet, oder wenn die Kamera 24 keine Bilder liefert.

Wie Fig. 2 ferner zeigt, nutzt das Steuermodul 32 nicht nur die Kamera 24 des Spurhalteassistenzsystems 28, sondern es ist auch mit einer Auswerteeinheit 48 des Spurhalteassistenzsystems 28 verbunden, um darüber informiert zu werden, wenn das Spurhalteassistenzsystem 28 eine Warnung an den Fahrer ausgibt. Auf diese Weise kann zusätzlich zu den bereits beschriebenen Kriterien der Abweichung der Fahrzeugposition von der Sollposition und der Fahreraktivität auch eine Warnung des Spurhalteassistenzsystems 28 zu einer Erhöhung des Zählers des Steuermoduls 32 führen.

Überschreitet der Zähler einen vorbestimmten Schwellenwert, so gibt das Steuermodul 32 über ein geeignetes Anzeigemittel 50 eine Warnung aus, um den Fahrer zu motivieren, sein Spurhaltevermögen selbst zu hinterfragen und gegebenenfalls eine Pause einzulegen. Alternativ oder zusätzlich kann das Anzeigemittel 50 - entweder auf Anfrage des Fahrers oder kontinuierlich - den jeweils aktuellen Wert des Zählers darstellen, um den Fahrer auf spielerische Weise dazu zu animieren durch besonders fehlerfreies Fahren und regelmäßige Aktivität den Zählerwert zu verringern.

Bei einer Unterbrechung der Fahrt wird der Zähler auf Null zurückgesetzt. Eine Fahrtunterbrechung kann beispielsweise anhand eines Abstellens eines Fahrzeugmotors und/oder anhand eines Öffnens einer Fahrertür ermittelt werden.

Rein beispielhaft wird die Funktion der voranstehend beschriebenen Vorrichtung anhand der nachfolgenden Fahrsituationen näher erläutert:

Das Fahrzeug 10 driftet in Richtung eines Randes der Fahrspur 16, beispielsweise in Richtung der gestrichelten inneren Fahrbahnmarkierung 20, und das Spurhalteassistenzsystem 28 gibt eine Warnung aus, woraufhin das Fahrzeug 10 abrupt wieder in die Mitte der Fahrspur 16 zurückgelenkt wird. In diesem Fall wird sowohl eine signifikante Abweichung der tatsächlichen Fahrzeugposition von der Sollposition ermittelt, als auch eine aktive Lenkbewegung, d.h. eine der genannten Fahrerhandlungen detektiert. Da das Steuermodul 32 aber erkennt, dass der Fahrer nicht von sich aus aktiv geworden ist, sondern erst durch die Warnung des Spurhalteassistenzsystems 28 zum Gegenlenken veranlasst wurde, wird die ermittelte Fahreraktivität ignoriert und der Zähler aufgrund der Warnung des Spurhalteassistenzsystems 28 erhöht.

Eine umgekehrte Situation liegt vor, wenn sich das Fahrzeug 10 durch eine scharfe Kurve bewegt, beispielsweise auf einer Autobahnauf- oder - abfahrt, und der Fahrer aktiv in das Fahrgeschehen eingreift. In dieser Situation kann möglicherweise eine erhöhte Abweichung der tatsächlichen Fahrzeugposition von der Sollposition bzw. ein Unvermögen des Fahrers zur Einhaltung der Sollposition ermittelt werden. Gleichzeitig wird vermutlich aber auch ein Einschlag des Lenkrads 42 und/oder durch den Sensor 46 eine erhöhte Gierbeschleunigung detektiert. Das Steuermodul 32 geht in dieser Situation daher davon aus, dass der Fahrer eine erhöhte Aufmerksamkeit zeigt. Eine Erhöhung des Zählers, die unter anderen Umständen aus der Abweichung der tatsächlichen Fahrzeugposition von der Sollposition resultieren würde, wird in diesem Fall durch die detektierte Fahrerhandlung also unterdrückt, wodurch die Ausgabe einer Fehlerwarnung vermieden wird.

Wenn das Fahrzeug 10 für einige Sekunden von links nach rechts und zurück driftet und zusätzlich die Standardabweichung der Abweichung zwischen tatsächlicher Fahrzeugposition und Sollposition über einen gewissen Zeitraum hinweg, z.B. für einige Sekunden einen vorbestimmten Schwellenwert überschreitet, so wird der Zähler einmalig erhöht und eine weitere Erhöhung des Zählers für eine vorbestimmte Zeitdauer, z.B. für die nächsten Sekunden, verhindert, um die Auslösung einer Fehlwarnung, die aus einer mehrfachen Erhöhung des Zählers bedingt durch eine einzige Gefahrensituation resultieren könnte, zu vermeiden.

Entsprechendes gilt für die Erfassung der Fahrerhandlungen. D.h. wenn eine Fahrerhandlung detektiert und bei der Aktualisierung des Zählers berücksichtigt wird, so führen innerhalb einer vorbestimmten Zeitdauer, z.B. von einigen Sekunden, danach detektierte Fahrerhandlungen nicht zu einer weiteren Änderung des Zählers.

### Bezugszeichenliste

- 10: Kraftfahrzeug
- 12: Fahrtrichtung
- 14: Straße
- 16: Fahrspur
- 18: Fahrspur
- 20: innere Fahrbahnmarkierung
- 22: äußere Fahrbahnmarkierung
- 24: Kamera
- 26: Blickfeld
- 28: Spurhalteassistenzsystem
- 30: Bildauswertungsmodul
- 32: Steuermodul
- 34: Fahreraktivitätserfassungsmodul
- 36: Fahrtrichtungsanzeigerschalter
- 38: Bremspedal
- 40: Gaspedal
- 42: Lenkrad
- 44: Längsbeschleunigungssensor
- 46: Gierbeschleunigungssensor
- 48: Auswerteeinheit
- 50: Anzeigemittel

## Patentansprüche

1. Verfahren zum Warnen eines Fahrers eines Kraftfahrzeugs (10) vor mangelndem Spurhaltevermögen, bei dem während der Fahrt
die laterale Position des Fahrzeugs (10) innerhalb einer Fahrspur (16, 18) ermittelt wird,
die Aktivität des Fahrers hinsichtlich mindestens einer vorbestimmten Fahrerhandlung ermittelt wird,
ein ein Maß für das Spurhaltevermögen des Fahrers darstellender Zähler in Abhängigkeit von der ermittelten Fahrzeugposition und der ermittelten Fahreraktivität erhöht wird, und
eine Warnung an den Fahrer ausgegeben wird, wenn der Zähler einen vorbestimmten Schwellenwert überschreitet, und/oder dem Fahrer der momentane Status des Zählers angezeigt wird.

2. Verfahren nach Anspruch 1,
**dadurch gekennzeichnet, dass**
der Zähler erhöht wird, wenn eine der folgenden Bedingungen erfüllt ist:
a) die ermittelte laterale Fahrzeugposition weicht signifikant von einem mittleren Wert der lateralen Fahrzeugpositionen ab, die während einer vergangenen ersten Zeitspanne ermittelt wurden;
b) das Fahrzeug (10) nähert sich mit einer einen ersten Geschwindigkeitsschwellenwert unterschreitenden Geschwindigkeit bis auf eine einen Distanzschwellenwert unterschreitende Distanz einer Fahrbahngrenze (20, 22) an, wonach das Fahrzeug (10) innerhalb einer zweiten Zeitspanne und mit einer einen zweiten Geschwindigkeitsschwellenwert überschreitenden Geschwindigkeit wieder zu einer Sollposition innerhalb der Fahrspur (16, 18) zurückkehrt;
c) das Fahrzeug (10) verlässt die Fahrspur (16, 18) zumindest teilweise;
d) keine der Bedingungen a) bis c) ist erfüllt, und es wird während einer vergangenen zweiten Zeitspanne keine vorbestimmte Fahrerhandlung detektiert.

3. Verfahren nach Anspruch 1 oder 2,
**dadurch gekennzeichnet, dass**
der Zähler erniedrigt wird, wenn ermittelt wird, dass der Fahrer mindestens eine vorbestimmte Fahrerhandlung vornimmt.

4. Verfahren nach Anspruch 3,
**dadurch gekennzeichnet, dass**
die vorbestimmten Fahrerhandlungen folgende Handlungen umfassen:
e) ein Fahrtrichtungsanzeigerschalter (36) des Fahrzeugs (10) wird betätigt;
f) ein Lenkrad (42) des Fahrzeugs (10) wird betätigt, und/oder eine Gierbeschleunigung des Fahrzeugs (10) überschreitet einen vorbestimmten Gierbeschleunigungsschwellenwert;
g) ein Bremspedal (38) des Fahrzeugs (10) wird betätigt;
h) ein Gaspedal (40) des Fahrzeugs (10) wird betätigt, und/oder eine Längsbeschleunigung des Fahrzeugs (10) überschreitet einen vorbestimmten Längsbeschleunigungsschwellenwert.

5. Verfahren nach einem der vorstehenden Ansprüche,
**dadurch gekennzeichnet, dass**
der Zähler erniedrigt wird, wenn die mittlere Geschwindigkeit des Fahrzeugs (10), welche während einer vergangenen dritten Zeitspanne herrschte, für länger als die dritte Zeitspanne unterhalb eines vorbestimmten Fahrzeuggeschwindigkeitsschwellenwerts liegt.

6. Verfahren nach einem der Ansprüche 2 bis 5,
**dadurch gekennzeichnet, dass**
der Zähler vorübergehend unverändert gelassen wird, wenn eine der folgenden Bedingungen erfüllt ist:
i) die Breite der Fahrspur unterschreitet einen vorbestimmten Fahrspurbreitenschwellenwert;
k) die mittlere Geschwindigkeit des Fahrzeugs, welche während einer vergangenen vierten Zeitspanne herrschte, für weniger als die vierte Zeitspanne unterhalb eines vorbestimmten Fahrzeuggeschwindigkeitsschwellenwerts liegt;
l) während einer vergangenen fünften Zeitspanne wurde weder eine Fahrzeugposition, noch eine vorbestimmte Fahrerhandlung detektiert, noch ist die Bedingung c) oder d) erfüllt.

7. Verfahren nach einem der Ansprüche 2 bis 6,
**dadurch gekennzeichnet, dass**
die Bedingung a) vorübergehend ignoriert wird, wenn ein Wechsel der Fahrspur (16, 18) detektiert wird.

8. Verfahren nach einem der Ansprüche 2 bis 7,
**dadurch gekennzeichnet, dass**
die Bedingung a) und die Bedingung b) oder c) vorübergehend ignoriert werden, wenn mindestens eine vorbestimmte Fahrerhandlung detektiert wird.

9. Verfahren nach einem der Ansprüche 2 bis 8,
**dadurch gekennzeichnet, dass**
die Ermittlung der Fahreraktivität vorübergehend unterdrückt wird, wenn die Bedingung b) oder c) detektiert wird, gegebenenfalls unter gleichzeitiger Detektion einer vorbestimmten Fahrerhandlung.

10. Verfahren nach einem der Ansprüche 2 bis 9,
**dadurch gekennzeichnet,dass**
die Beträge, um welche der Zähler im Falle der Bedingungen a) bis d) erhöht wird, vergrößert werden, wenn zusätzlich zu der erfüllten Bedingung ermittelt wird, dass der Fahrer sich für mehr als eine sechste Zeitspanne mit einem Gerät aus der Gruppe befasst, die ein Telefon, ein Navigationsgerät, ein Radio, eine Klimaanlage, eine Sitzverstelleinrichtung und einen Bordcomputer umfasst.

11. Verfahren nach einem der Ansprüche 2 bis 10,
**dadurch gekennzeichnet, dass**
die Bedingung b) ignoriert wird, wenn sie unmittelbar vor der Bedingung c) detektiert wird.

12. Verfahren nach einem der Ansprüche 2 bis 11,
**dadurch gekennzeichnet, dass**
die Detektion der Bedingung a) zu einer vorübergehenden Unterdrückung einer erneuten Ermittlung der Bedingung a) führt und/oder die Detektion einer vorbestimmten Fahrerhandlung zu einer vorübergehenden Unterdrückung einer erneuten Ermittlung der Fahreraktivität führt.

13. Verfahren nach einem der Ansprüche 2 bis 12,
**dadurch gekennzeichnet, dass**
der Zähler aufgrund der Bedingungen a) bis c) um einen größeren Betrag erhöht wird als aufgrund der Bedingung d) und/oder der Zähler aufgrund einer detektierten Fahrerhandlung um einen geringeren Betrag erniedrigt wird als er aufgrund der Bedingungen a) bis c) erhöht wird.

14. Verfahren nach einem der Ansprüche 2 bis 13,
**dadurch gekennzeichnet, dass**
die Ausgabe einer Warnung durch ein Spurhalteassistenzsystem (28) des Fahrzeugs (10) zu einer Erhöhung des Zählers führt.

15. Vorrichtung zum Warnen eines Fahrers eines Kraftfahrzeugs (10) vor mangelndem Spurhaltevermögen, insbesondere zur Durchführung des Verfahrens nach einem der vorstehenden Ansprüche, umfassend
eine Kamera (24), die einen vor dem Fahrzeug (10) liegenden Bodenbereich überwacht,
ein mit der Kamera (24) verbundenes Bildauswertungsmodul (30) zur Ermittlung der lateralen Position des Fahrzeugs (10) innerhalb einer Fahrspur (16, 18) anhand von Bildern, die durch die Kamera (24) aufgenommen werden,
ein Modul (34) zur Erfassung der Fahreraktivität, welches mit wenigstens einer Fahrer/Fahrzeug-Schnittstelle (36 - 42) und/oder mit wenigstens einem Beschleunigungssensor (44, 46) des Fahrzeugs (10) verbunden ist,
ein mit dem Bildauswertungsmodul (30) und dem Fahreraktivitätserfassungsmodul (34) verbundenes Steuermodul (32), welches in Abhängigkeit von der ermittelten Fahrzeugposition und der erfassten Fahreraktivität einen ein Maß für das Spurhaltevermögen des Fahrers darstellenden Zähler erhöht und welches die Ausgabe einer Warnung an den Fahrer initiiert, wenn der Zähler einen vorbestimmten Schwellenwert überschreitet, und/oder dem Fahrer den momentanen Status des Zählers anzeigt.
